# EUROPEAN PATENT SPECIFICATION

(11) **EP 2 776 173 B1**
(45) Date of publication and mention of the grant of the patent: **08.05.2019**
(21) Application number: 12843982.5
(22) Date of filing: 26.10.2012
(51) Int. Cl.: B05B 15/00, A01C 15/02, A01C 17/00, B05B 7/14

(54) **ADAPTABLE SPREADER**
ANPASSBARER STREUER
DISPOSITIF D'ÉTALEMENT ADAPTABLE

(30) Priority: 27.10.2011 US 201161552030 P
(43) Date of publication of application: 17.09.2014
(73) Proprietor: Earthway Products, Inc., Bristol, Indiana 46507 (US); Kendall, Jeffrey, Laurel, Maryland 20723 (US); Sevrey, Richard, Bristol, Indiana 46507 (US); Chapman, Richard H., Camillus, New York 13031 (US)
(72) Inventor: KENDALL, Jeffrey, Laurel, Maryland 20723 (US); SEVREY, Richard, Bristol, Indiana 46507 (US); CHAPMAN, Richard H., Camillus, New York 13031 (US)
(74) Representative: Barker Brettell LLP
(86) International application number: PCT/US2012/062180
(87) International publication number: WO 2013/063438

(56) References cited:
- WO-A1-2005/107431
- WO-A1-2009/137123
- DE-A1-102004 023 625
- DE-A1-102005 052 741
- GB-A- 421 826
- US-A- 2 986 305
- US-A- 3 888 196
- US-A- 3 888 196
- US-A- 5 287 999
- US-A- 5 287 999
- US-A- 5 493 852

## Description

### ORIGIN

The innovation disclosed herein relates to a particulate dispersing apparatus and, more specifically, to a spreader having interchangeable inserts to accommodate the dispersement of different sized particulate material.

### BACKGROUND

Traditional material spreaders have been designed to include a container, known as a hopper, from which particulate materials can be emptied slowly and evenly onto a spinning disk, called an impeller, so as to then be distributed in a pattern to a lawn or other like surface. Generally, the hoppers comprise side walls that taper inwardly from an open top to a flat, closed bottom through which one or more holes are pierced in such a location as to allow material to be emptied directly upon the surface of the spinning impeller. A problem with the traditional design is that the flat hopper bottom tends to gather material about its edges and upon its surface, oftentimes precluding complete emptying of the hopper, in what is known as bridging.

Another disadvantage to the traditional spreader is that although the traditional spreader has a means to adjust the output dispensing rate of the material, the traditional spreaders do not have a means to disperse particulate material that vary in size. For example, the traditional spreaders cannot adapt to disperse very fine particulate material, such as grass seed, up to larger particulate material, such as rock salt, stone, etc. in a uniform manner.

WO 2009/137123 A1 discloses a cartridge spreader system including a cartridge. The bottom of the cartridge includes a fitment with a metering gate, the fitment including hole for allowing through a specific size of particle.

US 3 888 196 A discloses a hood for a rotary tiller and a dispensing means for dispensing material into the confines of the hood. The dispensing means includes a perforate plate for supporting the weight of material above the plate whilst letting some material through the holes in the perforate plate.

US 5 287 999 A discloses an apparatus for spreading granular material, the apparatus including a material gauge that is removably located in the bottom of a hopper. The material gauge allows the granular material to leave the hopper through apertures in the material gauge.

DE 10 2004 023625 A1 discloses a dispensing device for bulk material. The dispensing device includes a partition including an aperture that feeds to a dosing device.

### SUMMARY

The following presents a simplified summary of the innovation in order to provide a basic understanding of some aspects of the innovation. This summary is not an extensive overview of the innovation. It is not intended to identify key/critical elements of the innovation or to delineate the scope of the innovation. Its sole purpose is to present some concepts of the innovation in a simplified form as a prelude to the more detailed description that is presented later.

The innovation disclosed and claimed herein, in one aspect thereof comprises a particulate dispersing apparatus according to claim 1 and in another aspect thereof a method of changing the output of said particulate dispersing apparatus according to claim 9.

To the accomplishment of the foregoing and related ends, certain illustrative aspects of the innovation are described herein in connection with the following description and the annexed drawings. These aspects are indicative, however, of but a few of the various ways in which the principles of the innovation can be employed and the subject innovation is intended to include all such aspects and their equivalents. Other advantages and novel features of the innovation will become apparent from the following detailed description of the innovation when considered in conjunction with the drawings.

### BRIEF DESCRIPTION OF THE DRAWINGS

FIG. 1 is a perspective view of an example particulate dispensing apparatus featuring the innovation disclosed herein in accordance with the innovation.
FIG. 2 is a perspective view of another example particulate dispensing apparatus featuring the innovation disclosed herein in accordance with the innovation.
FIG. 3 is a top perspective view of the example particulate dispensing apparatus of FIG. 1 in accordance with an aspect of the innovation.
FIG. 4 is a bottom perspective view of the example particulate dispensing apparatus of FIG. 1 in accordance with an aspect of the innovation.
FIG. 5 is a close-up view of an open-close/adjustment assembly in accordance with an aspect of the innovation.
FIGS. 6A-6D are a perspective, top, bottom, and side view of an example hopper in accordance with an aspect of the innovation.
FIGS. 7A-7C are a perspective, top, and side view of an example removable insert in accordance with an aspect of the innovation.
FIG. 8 is perspective view illustrating placement of the removable insert into the vessel in accordance with an aspect of the innovation.
FIG. 9 is a top view of a vessel illustrating the placement of the removable insert in accordance with an aspect of the innovation.
FIG. 10 is a side view of an example fastening device in accordance with an aspect of the innovation.
FIG. 11 is a cut-out side view of an example vessel and removable insert illustrating a flow pattern of particulate material in accordance with an aspect of the innovation.
FIG. 12 is a top view of an example embodiment of a removable insert in accordance with an aspect of the innovation.
FIG. 13 is a top view of another example embodiment of a removable insert in accordance with an aspect of the innovation.
FIG. 14 is a top view of yet another example embodiment of a removable insert in accordance with an aspect of the innovation.
FIG. 15 is a bottom perspective view of a vessel illustrating an example embodiment of a shut-off/adjustment mechanism in accordance with the innovation.
FIG. 16 is a bottom perspective view of a vessel illustrating another example embodiment of a shut-off/adjustment mechanism in accordance with the innovation.
FIG. 17 is a perspective view of the shut-off/adjustment mechanism of FIG. 16 illustrating a location of agitating pins in accordance with the innovation.
FIG. 18 is a top perspective view of the vessel of FIG. 16 illustrating the location of the agitating pins of FIG. 17 in accordance with the innovation.
FIG. 19 is an example flow chart illustrating a method of interchanging a removable insert in accordance with an aspect of the innovation.

### DETAILED DESCRIPTION

The innovation is now described with reference to the drawings, wherein like reference numerals are used to refer to like elements throughout. In the following description, for purposes of explanation, numerous specific details are set forth in order to provide a thorough understanding of the subject innovation. It may be evident, however, that the innovation can be practiced without these specific details.

While, for purposes of simplicity of explanation, the one or more methodologies shown herein, *e*.*g*., in the form of a flow chart, are shown and described as a series of acts, it is to be understood and appreciated that the subject innovation is not limited by the order of acts, as some acts may, in accordance with the innovation, occur in a different order and/or concurrently with other acts from that shown and described herein. For example, those skilled in the art will understand and appreciate that a methodology could alternatively be represented as a series of interrelated states or events, such as in a state diagram. Moreover, not all illustrated acts may be required to implement a methodology in accordance with the innovation.

The innovation described herein discloses a particulate dispersement apparatus and, more specifically, a spreader capable of evenly and uniformly dispersing particulate material of various sizes (e.g., seed, fertilizer, rock salt, stone, etc.). In various aspects, the subject innovation includes various features not available in conventional spreaders.

Embodiments of the subject innovation include a spreader that can be used with any of a plurality of interchangeable and readily installable (e.g., snap-in) trays or inserts. This spreader can incorporate a hopper different from conventional hoppers in that it has no bottom or has a removable bottom, and is adapted to engage with any of the plurality of inserts. These trays or inserts can be self-cleaning hopper inserts or trays that can allow a user to effectively have a plurality of different spreaders in one, by changing inserts depending on the situation. For example, any of the plurality of inserts with unique drop hole patterns discussed infra can be used, as well as other variations that would be understood by a person of skill in the art in light of the teachings herein. In other aspects, the innovation can incorporate substantially any conventional drop hole pattern into a novel insert useable with the subject innovation. Further aspects can include conventional patterns modified to incorporate some or all the novel features discussed herein in connection with various inserts.

As described further below, different variations of hopper inserts are disclosed where each insert includes a different hole pattern, with each pattern configured to meet the specific demands of different materials, applications, and outputs. Although only a limited number of patterns are discussed, it is to be understood that other variations can be adapted for other purposes in light of the discussion herein.

Additionally, embodiments of the subject innovation address problems encountered by conventional systems (e.g., bridging), and can be "self-cleaning' in that the configuration can allow material to flow unimpeded out of the hopper. The hopper portion of the subject innovation can be similar to the traditional design, except, as mentioned above, that its bottom can be open and in its place, any of a plurality of removable inserts can be introduced, for example, depending on the application or material. Unlike the flat bottoms of the traditional hoppers, the removable insert can be generally funnel-shaped (e.g., can be part of a pyramidal, conic, or other shape wherein the cross-section tends to decrease toward an apex, etc.), transitioning from the cross-sectional shape of the mating hopper at its periphery downwardly to an imaginary apex outside of its body. Because of the tapering of the insert, material in the hopper will move toward the apex as the material is pulled downwardly by gravity.

In various embodiments, the insert can further comprise a collection cup, which can be a downwardly extending portion of the insert. The collection cup can have one or more outlet holes through which material can exit the hopper. Because the inwardly tapered side walls of the cup can be vertically aligned with the apex of the insert (e.g., such that the apex is aligned above, below, or within the cup, etc.), gravity will cause material to flow into the cup and then through the one or more outlet holes. In those embodiments where multiple outlet openings may be required, all of those openings can exist within the confines of the collection cup, and material flow can be further directed by the inclusion of and shaping of housing material that can exist between each pair of openings. For example, in instances in which there is a surface between a pair of openings, that surface can be tapered downwardly toward an opening, rather than being horizontal. This feature can provide for more efficient dispensing of material in a variety of ways, for example, in that the tapered shape of the surface can prevent material from remaining on it. Because of this, all material can escape the hopper/insert assembly, in contrast to conventional systems.

In other aspects, the subject innovation can include an agitator to minimize bridging and facilitate proper material flow, such as but not limited to oscillating fingers described further below. In various embodiments, these oscillating fingers or another agitator can be incorporated into spreaders using interchangeable inserts, as well as into a "fixed" spreader. In various embodiments, the agitator can reside in the shut-off plate portion of the assembly. The fingers can be an upwardly protruding portion of the agitator, such as pins, etc., and can protrude upwardly away from said shut-off plate and through each of the drop holes. In aspects, the fingers can protrude through the drop holes a specified distance into the hopper insert or tray. The oscillating motion of the fingers can create air-gaps and can assist gravity in the process of feeding materials that otherwise have a tendency to bridge and therefore not flow properly. The oscillating motion of the fingers can encourage materials to move at a constant rate into the drop holes, thereby creating an even flow of the material onto the impeller (the spinning disk below the drop holes). This flow facilitates a superior spread pattern, even with very difficult to spread materials.

In other aspects, the innovation can also incorporate a floating gearbox. In these aspects, the "fixed" axle that has been the industry standard for commercial & professional gearboxes can be replaced by an axle that uses a novel parabolic drive to power the gearbox. This can reduce user effort in operation. Additionally, less space than that required for the packaging of current gear boxes will be required for the packaging of the new assemblies.

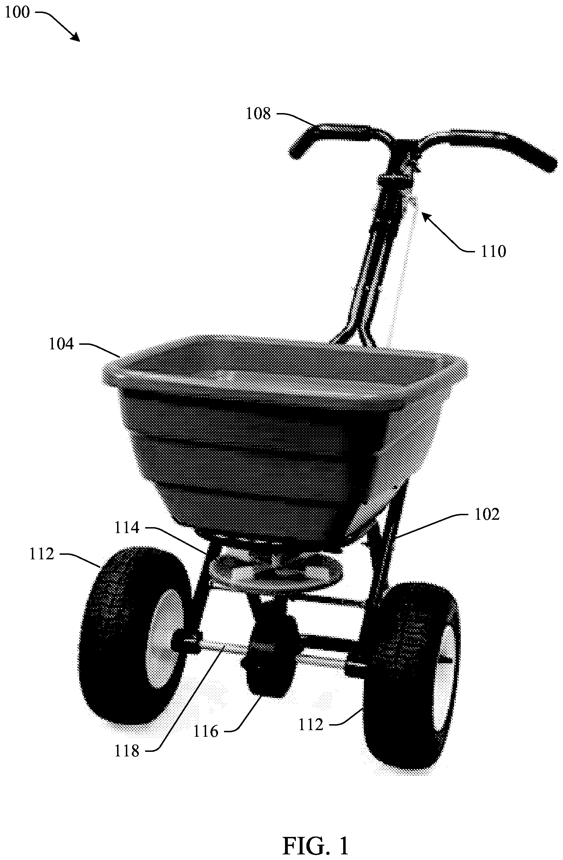

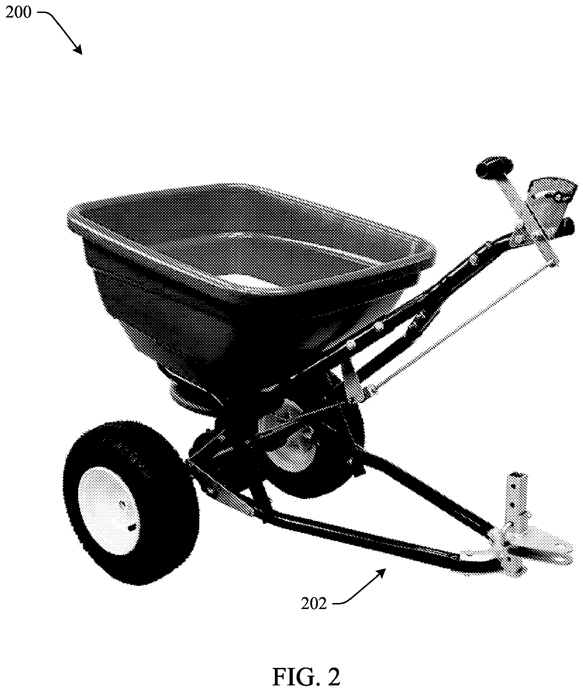

With reference now to the figures, FIG. 1 illustrates an example embodiment of a particulate dispersing apparatus 100 that is part of an innovative system and method for changing a particulate output of the dispersing apparatus 100 in accordance with aspects of the innovation. It is to be understood that the particulate dispersing apparatus 100 may be any type of particulate dispersing apparatus capable of dispersing particulate material, such as but not limited to a lawn seed/fertilizer spreader, a salt spreader, etc. In addition, the particulate dispersing apparatus 100 may be a walk behind type spreader, a hand-held type spreader, a tow-type spreader 200 having a connection device 202 to connect the spreader 200 to a vehicle, as shown in FIG. 2, etc. The example particulate dispersing apparatus 100 illustrated in FIG. 1 is a walk behind type spreader and will be used to describe the innovation disclosed herein. Thus, the example particulate dispersing apparatus 100 illustrated in FIG. 1 is for purposes of illustration only and is not intended to limit the scope of the innovation.

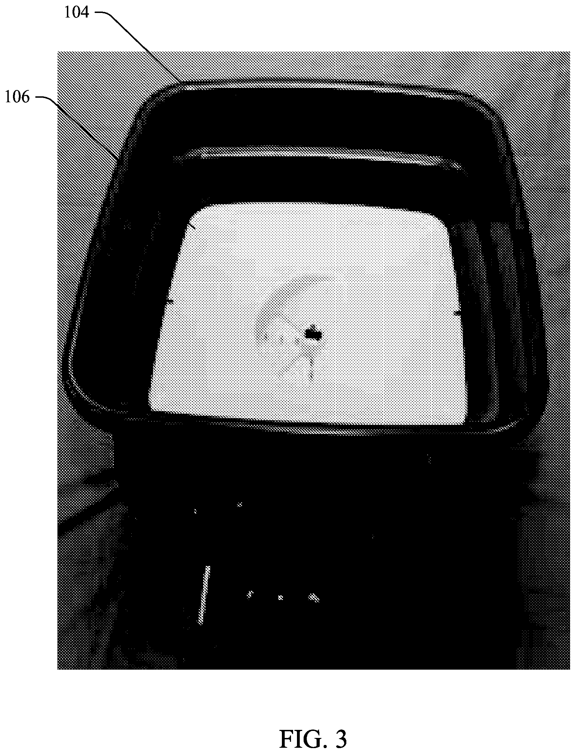

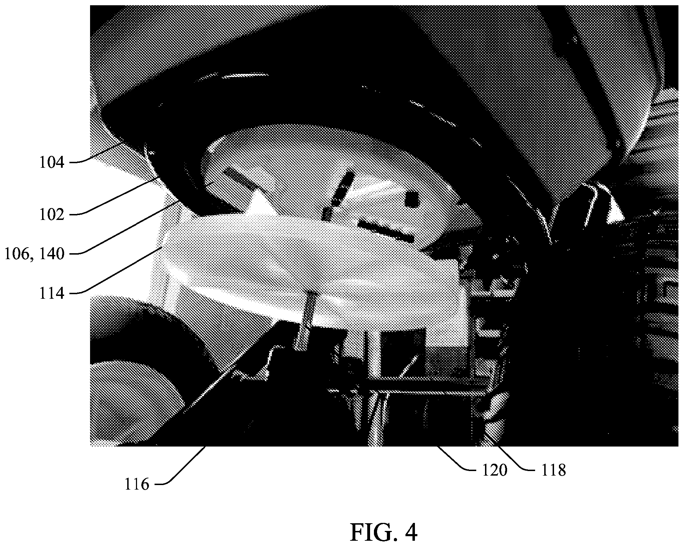

Referring to FIGS. 1 and 3-5, the example particulate dispersing apparatus 100, which as mentioned above is a walk behind spreader, includes a frame 102, a vessel or hopper 104 mounted to the frame 102 (see FIG. 4), a removable insert 106 disposed inside the hopper 104, a push handle 108 mounted to the frame 102, an open-close/adjustment (shut-off) assembly 110, a pair of wheels 112, a dispersing mechanism 114 to disperse product from inside the hopper 104, and a gear box 116 operatively connecting the wheels 112 and the dispersing mechanism 114 via an axle 118 and a gear/impeller shaft 120.

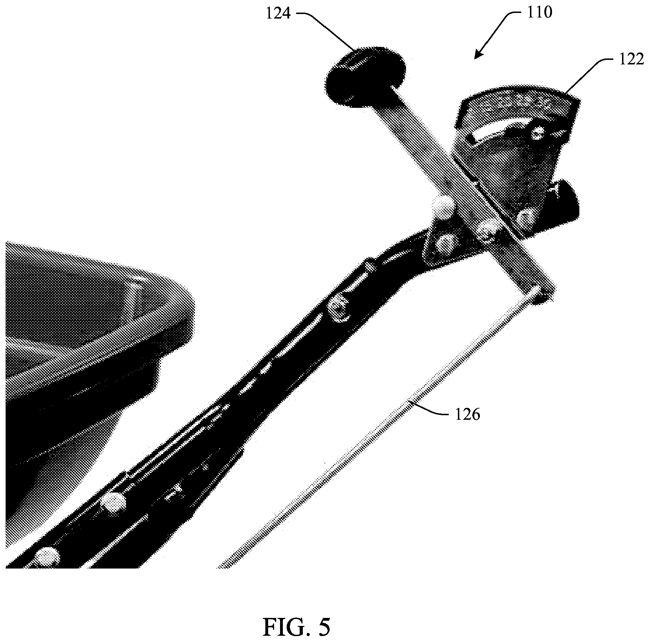

Referring to FIG. 5, the open-close/adjustment assembly 110 includes a gauge 122, an adjustable lever 124 connected to the gauge 122, a rod 126 connected to the lever 124 at one end and to a shut-off/adjustment plate described further below at an opposite end. When the lever 124 is in a first (full forward) position, as shown in FIG. 5, the open-close/adjustment assembly 110 is in a full closed position. In this position, the shut-off/adjustment plate of the removable insert 106 is in a full closed position thereby preventing any particulate material from exiting the dispersing apparatus 100. Conversely, when the lever 124 is in a second (full rearward) position, the open-close/adjustment assembly 110 is in a full open position. In this position, the shut-off/adjustment plate of the removable insert 106 is in a full open position, thus, allowing a maximum flow of particulate material to be dispersed by the dispersing apparatus 100. The shut-off/adjustment plate of the removable insert 106 can be operated at any position between the full closed position and the full open position to thereby vary the amount of particulate material dispersed by the dispersing apparatus 100.

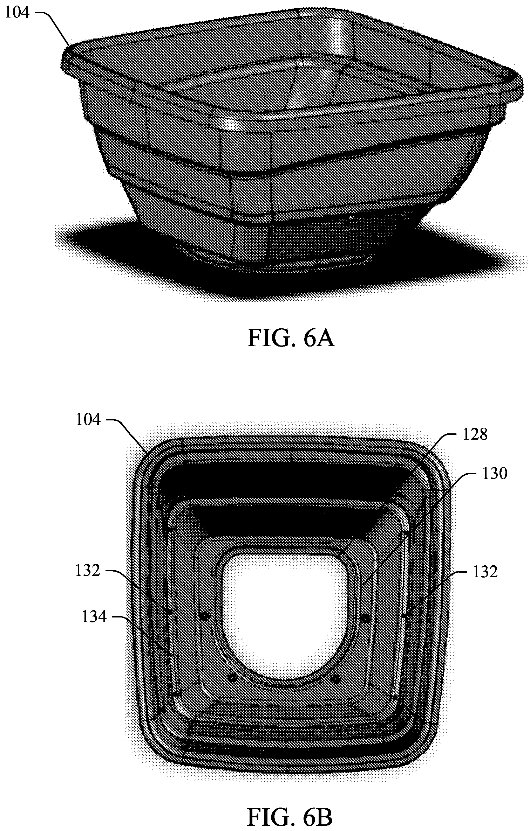

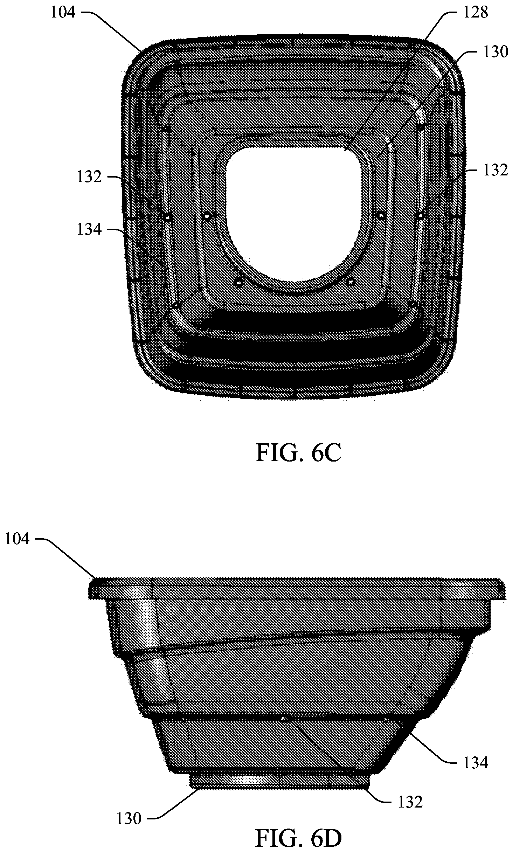

Referring to FIGS. 6A-6D, the hopper 104 has a square type shape, as viewed from the top, but it is to be understood that the shape of the hopper 104 can be any shape, such as but not limited to rectangular, circular, etc. An opening 128 is defined in a bottom 130 of the hopper 104 and is adapted to receive a bottom portion of the removable insert 106 as will be described further below. Attachment apertures 132 are defined in a ridge 134 in two or more sides of the hopper 104 and are adapted to receive a fastening device to secure the removable insert 106 to the hopper 104.

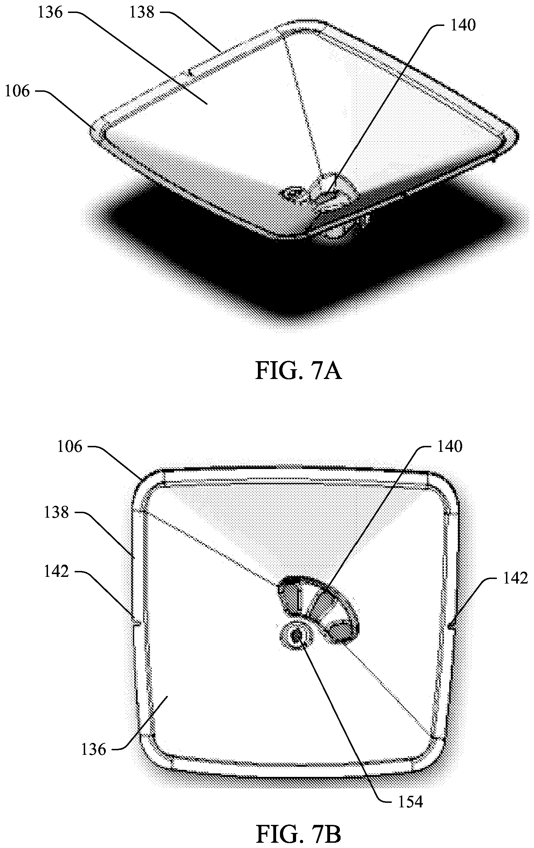

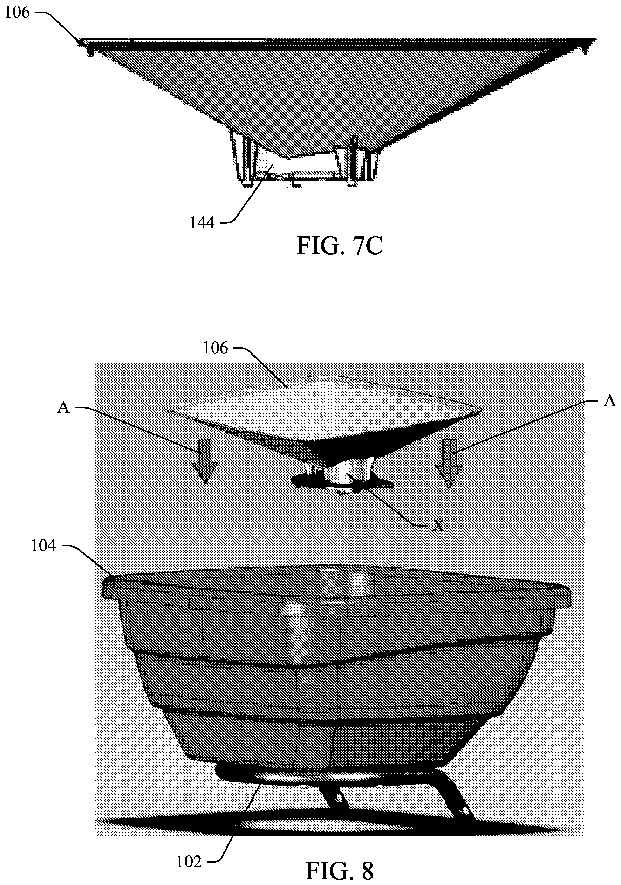

Referring to FIGS. 7A-7C, as mentioned above, the dispersing apparatus 100 includes one or more removable inserts 106 disposed inside the hopper 104. The removable insert 106 is configured to have a shape similar to an inside shape of the hopper 104. In the example illustrated in the figures, as viewed from the top in FIG. 6B, the removable insert 106 has a square shape, but can be configured to have any shape to conform to the shape of the hopper 104, such as but not limited to rectangular, circular, etc. In addition, the removable insert 106 has a concave or funnel shape whereby a bottom surface 136 transitions downward from a perimeter 138 toward one or more openings 140 defined in the bottom surface 136 of the removable insert 106. This configuration facilitates optimal flow of the particulate material out of the hopper 104, as will be illustrated further below.

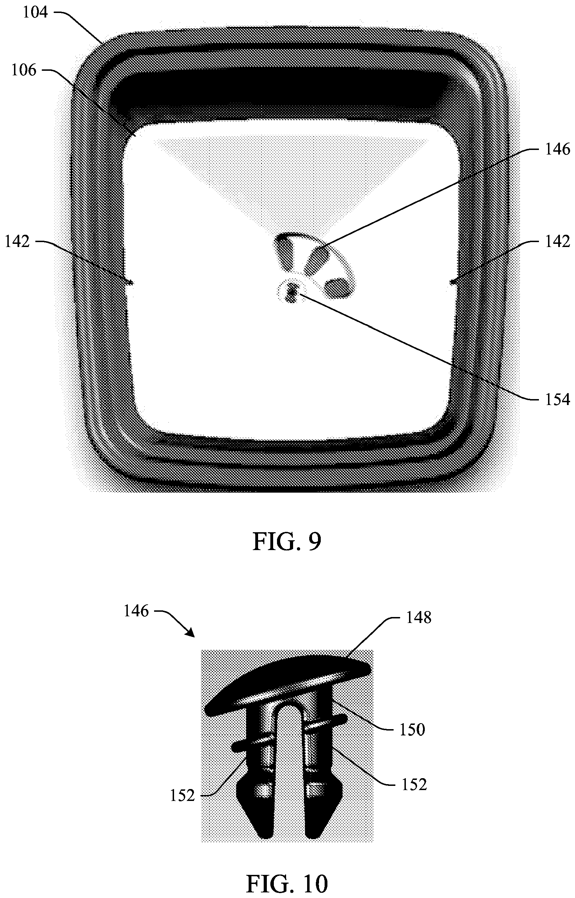

The removable insert 106 further includes attachment slots 142 defined in the perimeter 138 of the removable insert 106, which align with the attachment apertures 132 defined inside the hopper 104 to facilitate attachment of the removable insert 106 to the hopper 104. To secure the removable insert 106 inside the hopper 104, the removable insert 106 is placed inside the hopper 104 as shown by the arrows A in FIG. 8 such that a bottom portion 144 of the removable insert 106 extends into the opening 128 defined in the hopper 104, which is best shown in FIG. 4. Once properly inserted, the perimeter 138 of the removable insert 106 engages the ridge 134 inside the hopper 104 such that the removable insert 106 sits inside the hopper 106, as shown in FIG. 9. In addition, once the removable insert 106 is properly inserted, the attachment slots 142 defined in the removable insert 106 are aligned with the attachment apertures 132 defined in the hopper 104.

A fastener 146 is inserted into and through both the attachment slots 142 and the attachment apertures 132 to secure the removable insert 106 to the hopper 104. The fastener may be any type of mechanical fastener, such as but not limited to, a snap type fastener, a clip, a screw, a nut and bolt, etc. An example of a snap type fastener is illustrated in FIG. 10. The fastener 146 includes a head 148 and a body 150 having a pair of legs 152 separated by a gap 154. The head 148 is pitched to conform to a pitch of the hopper 104 and the removable insert 106 to insure that the removable insert 106 sits flush against the inside surface of the hopper 104. This head 148 configuration insures that the perimeter 138 of the removable insert 106 and/or the fastener 146 do not impede the flow of particulate material out of the hopper 104. The legs 152 of the fastener 146 compress toward each other when the fastener 146 is inserted into and removed from both the attachment slots 142 and the attachment apertures 132. Once fully inserted, the fastener 146 secures the removable insert 106 to the hopper 104.

Referring to FIGS. 7B and 9, a shaft aperture 154 is defined in the bottom portion 144 of the removable insert 106 and is adapted to receive the gear/impeller shaft 120 that extends upward from the gear box 116 into the hopper 104. A batwing-like shaped bushing placed over the gear/impeller shaft and engages the removable insert 106 provides support for the gear/impeller shaft 120 and is removable to allow replacement of the removable insert 106, as will be described further below.

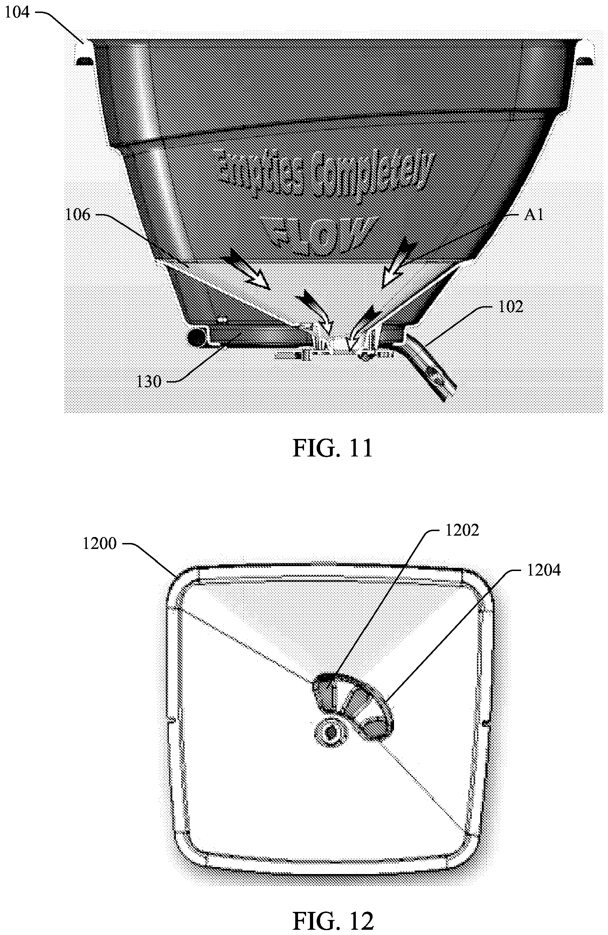

Referring to FIG. 11, as mentioned above, the removable insert 106 has a concave or funnel like shape. In other words, the bottom surface 136 of the removable insert 106 slopes in a downward direction from the perimeter 138 toward the one or more openings 140 defined in the removable insert 106. This shape facilitates the flow of the particulate material through the one or more openings 140 and out of the hopper 104. Specifically, the particulate material easily flows in the direction indicated by the arrows A1 in FIG. 11.

Thus, as mentioned above, the innovative configuration addresses bridging problems encountered by conventional spreader systems. In addition, the innovative configuration can be "self-cleaning" in that the configuration allows particulate material to flow unimpeded out of the hopper. Still further, the innovative particulate dispensing system and method includes interchanging removable inserts whereby each removable insert includes one or more openings, thus, forming a specific hole pattern configured to meet specific demands of different materials, applications, and outputs. Disclosed below are several example embodiments of removable inserts having different hole patterns and, thus, different particulate applications and outputs. It is to be understood, that the examples described herein are for illustrative purposes only and are not intended to limit the scope of the innovation.

Referring to FIG. 12, a first example embodiment of a removable insert 1200 is illustrated in accordance with an aspect of the innovation. The removable insert 1200 includes multiple (i.e., three) small openings 1202 thereby forming a first hole pattern 1204, whereby the multiple openings 1202 have a predetermined size. Thus, the removable insert 1200 is configured for use with particular material that corresponds to the size of the multiple openings 1202, such as but not limited to, fertilizers, lawn chemicals, ice melt, and other materials for general purpose use.

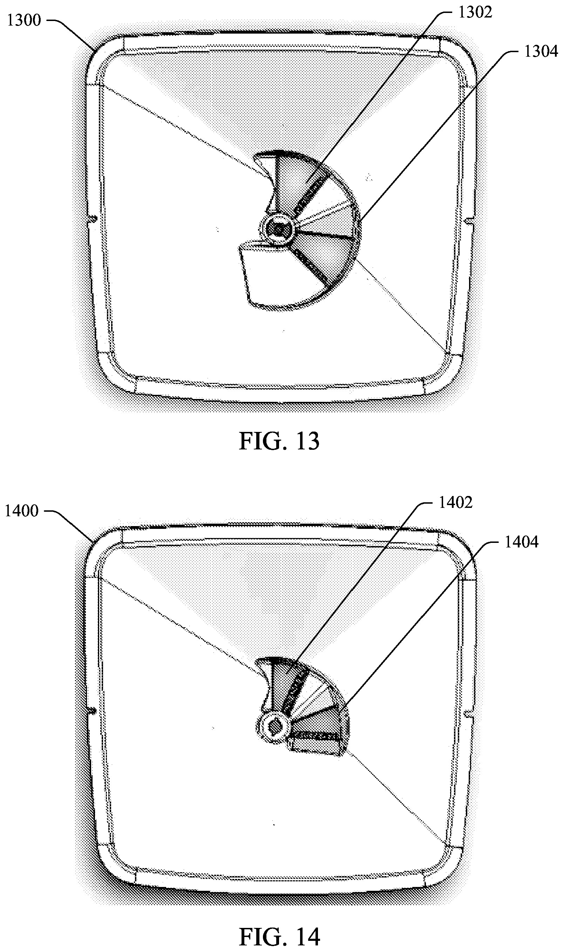

Referring to FIG. 13, a second example embodiment of a removable insert 1300 is illustrated in accordance with an aspect of the innovation. The removable insert 1300 includes multiple (i.e., two) larger openings 1302 thereby forming a second hole pattern 1304 that produces a high particulate output. Because the openings 1302 are larger than the openings 1302 described above, the hole pattern 1304 is more suitable for use with larger particulate material such as rock salt, damp sand, and/or, organic fertilizers that have a larger particle size and/or are most effectively distributed at a high application rate. Thus, the removable insert 1300 is for applications that require a high volume output of particulate material. In addition, a spread pattern generated by the removable insert 1300 can be an approximately 180 degree semi-circle from the center of the gearbox, forward or opposite to the operator or user, and can be in line with the direction of the operation on a walk behind spreader, or rearward or opposite to the operator and in line away from with the direction of the operation on a tow spreader.

Referring to FIG. 14, a third example embodiment of a removable insert 1400 is illustrated in accordance with an aspect of the innovation. The removable insert 1400 includes multiple (i.e., two) medium sized openings 1402 thereby forming a third hole pattern 1404 that produces a low volume particulate output. Because the openings 1402 are smaller than the openings 1302 described above, the hole pattern 1404 is more suitable for use with smaller particulate material such as fine grass seeds (e.g., Bermuda), low application rate chemicals (pesticide/herbicide), the application of fire ant baits, and very fine particulate and/or granular materials.

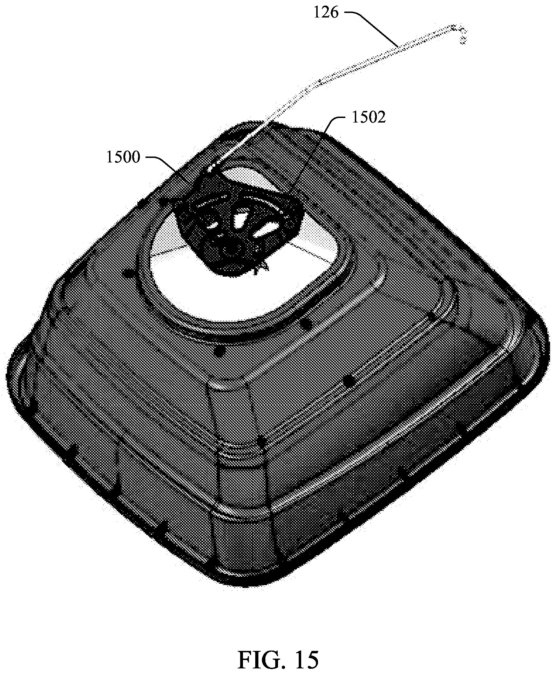

Referring to FIG. 15, in another example embodiment, the particulate dispersing apparatus 100, 200 illustrated in FIGS. 1 and 2 and described herein may include a shut-off/adjustment plate 1500 that includes openings 1502. The openings 1502 are similar in quantity, size and shape to the openings 1202, 1302, 1402 described above. In the example embodiment illustrated in FIG. 15, the shut-off/adjustment plate 1500 has openings 1502 similar in quantity, size and shape to the openings 1202 described in the first example embodiment above and is, thus, for illustrative purposes only and is not intended to limit the scope of the innovation.

The shut-off/adjustment plate 1500 is connected to the open-close/adjustment assembly 110 via the connector rod 126 described above. As described above, when the lever 124 is in a first (full forward) position, as shown in FIG. 5, the open-close/adjustment assembly 110 is in a full closed position. In this position, the shut-off/adjustment plate 1500 covers the openings 1202, 1302, 1402 in the corresponding removable insert and is, thus, in a full closed position thereby preventing any particulate from exiting the dispersing apparatus 100. Conversely, when the lever 124 is in a second (full rearward) position, the open-close/adjustment assembly 110 is in a full open position. In this position, the shut-off/adjustment plate 1500 of the removable insert 106 is not covering the openings 1202, 1302, 1402 of the corresponding removable insert, thus, allowing a maximum flow of particulate to be dispersed by the dispersing apparatus 100. In other words, the holes 1502 in the shut-off/adjustment plate 1500 are aligned with the openings 1202, 1302, 1402 in the corresponding removable insert thereby allowing particulate material to flow out of the vessel 104. In addition, the shut-off/adjustment plate 1500 of the removable insert 106 can be operated at any position between the full closed position and the full open position to thereby vary the amount of particulate material dispersed by the dispersing apparatus 100.

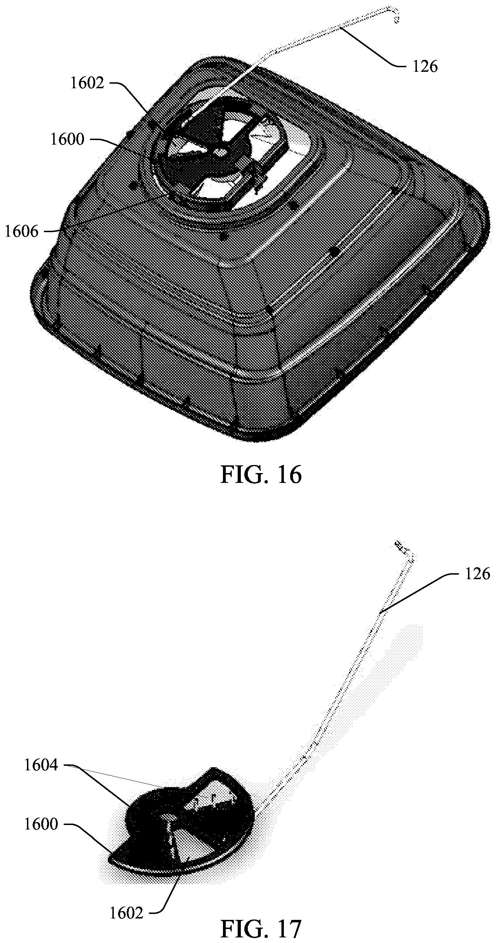

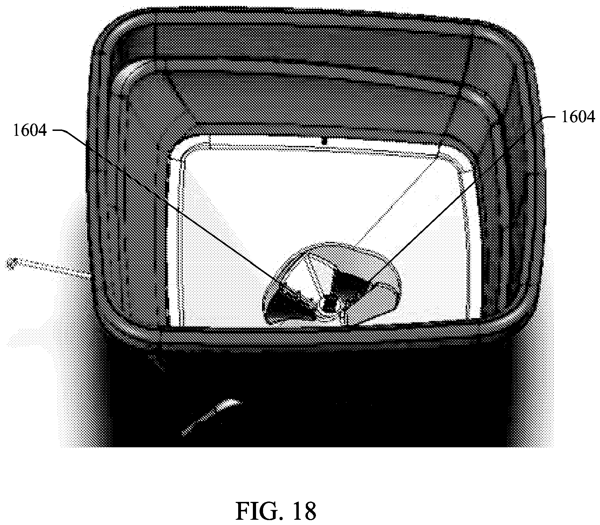

In yet another embodiment, illustrated in FIGS. 16-18, the particulate dispersing apparatus 100, 200 illustrated in FIGS. 1 and 2 and described herein may include a shut-off/adjustment plate 1600 that includes openings 1602 and agitator pins 1604. The agitator pins 1604 are disposed at an edge of the one or more openings 1602. Thus, the agitator pins 1604 are also disposed at an edge of the openings 1202, 1302, 1402 of the corresponding removable insert. During operation of the particulate dispensing apparatus 100, the agitating pins 1604 oscillate, which agitates and feeds the particulate material out of the openings in the removable inserts and the shut-off/adjustment plate 1600 thereby, creating a more uniform and consistent flow of particulate material to the impeller, thus, creating a better spread of particulate material across a spread pattern. A collar 1606 can be included and attached to a bottom of the vessel to provide additional support for the shut-off/adjustment plate 1600.

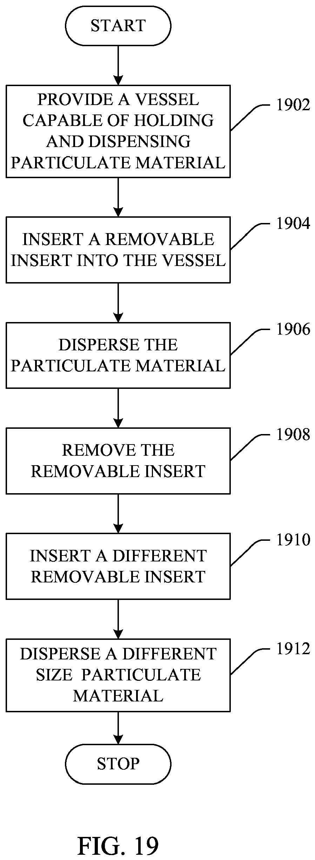

Referring to FIG. 19, a method of configuring a particulate material dispensing apparatus to accommodate different sized particles is illustrated. At 1902, a vessel that holds and dispenses particulate material is provided. At 1904, a removable insert is placed into an inside of the vessel, whereby the removable insert has a hole pattern that includes a least one opening to accommodate the dispensing of a particulate material having a particular size. At 1906, the particulate material is dispersed. At 1908, the removable insert is removed from the vessel. At 1910, a different removable insert is placed into the vessel, whereby the different removable insert has a different hole pattern distinct from the hole pattern of the removable insert. At 1912, a different size particulate material is dispersed. The different size of the different particular material corresponds with the different hole pattern of the different removable insert. Further, the different particular size is distinct from the particular size of the particulate material that corresponds with the removable insert.

Although multiple features have on some occasions been discussed herein as being incorporated into single embodiments in order to convey aspects of the subject innovation concisely, it is to be appreciated that these features are independent, and various embodiments can incorporate some of these features without others (e.g., novel drop hole designs, even if used in connection with fixed bottom hoppers; agitators; interchangeable inserts; floating gearbox; etc.) as will become evident from the description below.

What has been described above includes examples of the innovation. It is, of course, not possible to describe every conceivable combination of components or methodologies for purposes of describing the subject innovation, but one of ordinary skill in the art may recognize that many further combinations and permutations of the innovation are possible. Furthermore, to the extent that the term "includes" is used in either the detailed description or the claims, such term is intended to be inclusive in a manner similar to the term "comprising" as "comprising" is interpreted when employed as a transitional word in a claim.

## Claims

1. A particulate dispersing apparatus (100) comprising:
a vessel (104) configured to contain particulate material and having an opening (128) defined in a bottom portion (130);
a plurality of interchangeable inserts (106) having a shape similar to that of the vessel (104) that when inserted into the vessel (104) the inserts are adapted to engage and removably attach to a ridge (134) inside the vessel (104) via a fastener (146) inserted through at least one attachment slot (142) defined in a perimeter (138) of each insert (106) and at least one attachment aperture (132) defined in the ridge (134) such that a bottom portion of each insert (106) extends into the opening (128) of the vessel (104), each insert (106) having a funnel-like shape and distinct hole pattern defined in the bottom of each insert (106), wherein a bottom surface of each insert (106) transitions in a downward direction from a perimeter (138) of each insert (106) to the distinct hole pattern thereby facilitating the flow of the particulate material through the distinct hole pattern defined in a bottom of each insert (106), the distinct hole pattern facilitating the flow of different sized particulate material from inside the vessel; and
a dispersing mechanism that disperses the particulate material flowing through the opening (128).

2. The particulate dispersing apparatus (100) of claim 1, wherein the plurality of interchangeable inserts (106) includes a first insert (1200) having a plurality of first openings (1202) defined in a bottom surface of the first insert (1200) that facilitate the dispersement of a first sized particulate material.

3. The particulate dispersing apparatus (100) of claim 2, wherein the plurality of interchangeable inserts (106) includes a second insert (1300) having a plurality of second openings (1302) defined in a bottom surface of the second insert (1300) that facilitate the dispersement of a second sized particulate material, wherein the plurality of second openings (1302) are of a different size, shape, and/or quantity than the plurality of first openings (1202).

4. The particulate dispersing apparatus (100) of claim 3, wherein the plurality of interchangeable inserts (106) includes a third insert (1400) having a plurality of third openings (1402) defined in a bottom surface of the third insert (1400) that facilitate the dispersement of a third sized particulate material, wherein the plurality of third openings (1402) are of a different size, shape, and/or quantity than the plurality of first openings (1202) and the plurality of second openings (1302).

5. The particulate dispersing apparatus (100) of claim 3, further comprising a plurality of agitator pins (1604) disposed adjacent to the plurality of openings thereby facilitating a uniform flow of particulate material out of the vessel (104).

6. The particulate dispersing apparatus (100) of claim 1, further comprising an adjustment assembly (110) configured to regulate a flow rate of particulate material through the distinct hole pattern.

7. The particulate dispersing apparatus (100) of claim 1, wherein the dispersing apparatus is configured for use as a walk-behind spreader.

8. The particulate dispersing apparatus (100) of claim 1, wherein the dispersing apparatus is configured for use as a tow spreader (200).

9. A method of changing the output of a particulate dispersing apparatus (100) according to claim 1, comprising:
placing a removable insert (106) having a first hole pattern (1204) that dispenses material having a first size into the vessel (104);
inserting the removable fastener (146) through the attachment slot (142) defined in the perimeter (138) of the removable insert (106) and the attachment aperture (132) defined in the ridge (134) of the particulate dispersing apparatus (100);
dispensing the particulate material of the first size;
removing the removable fastener (146);
removing the removable insert (106);
placing a removable insert (106) having a second hole pattern (1304) that dispenses particulate material having a second size into a vessel (104);
inserting the removable fastener (146) through an attachment slot (142) defined in a perimeter (138) of the removable insert (106) and the attachment aperture (132) defined in the ridge (134) of the particulate dispersing apparatus (100); and
dispensing the particulate of the second size.

10. The method of claim 9, wherein the particulate dispersing apparatus (100) is a walk-behind or tow spreader (200).

## Patentansprüche

1. Partikelverteilungsvorrichtung (100), Folgendes umfassend:
einen Behälter (104), der Partikelmaterial enthalten kann und eine in einem Bodenabschnitt (130) definierte Öffnung (128) aufweist;
mehrere austauschbare Einsätze (106), die eine Form aufweisen, die ähnlich der des Behälters (104) ist, sodass, wenn die Einsätze in den Behälter (104) eingesetzt werden, sie über eine Befestigungseinrichtung (146), die durch mindestens einen Befestigungsschlitz (142), der im Umfang (138) jedes Einsatzes (106) definiert ist, eingesetzt wird, und mindestens eine Befestigungsöffnung (132), die in der Kante (134) definiert ist, in eine Kante (134) in dem Behälter (104) eingreifen und lösbar an dieser befestigt werden, sodass sich ein Bodenabschnitt jedes Einsatzes (106) in die Öffnung (128) des Behälters (104) erstreckt, wobei jeder Einsatz (106) eine Trichterform und ein individuelles Lochmuster im Boden jedes Einsatzes (106) aufweist, wobei eine Bodenfläche jedes Einsatzes (106) von einem Umfang (138) jedes Einsatzes (106) zu dem individuellen Lochmuster nach unten übergeht, wodurch das Strömen des Partikelmaterials durch das individuelle Lochmuster im Boden jedes Einsatzes (106) ermöglicht wird, wobei das individuelle Lochmuster das Strömen von Partikelmaterial verschiedener Größen aus dem Behälter ermöglicht; und
einen Verteilermechanismus, der das durch die Öffnung (128) strömende Partikelmaterial verteilt.

2. Partikelverteilungsvorrichtung (100) nach Anspruch 1, wobei die mehreren austauschbaren Einsätze (106) einen ersten Einsatz (1200) einschließen, der mehrere erste Öffnungen (1202) in der Bodenfläche des ersten Einsatzes (1200) aufweist, die das Verteilen eines Partikelmaterials einer ersten Größe ermöglichen.

3. Partikelverteilungsvorrichtung (100) nach Anspruch 2, wobei die mehreren austauschbaren Einsätze (106) einen zweiten Einsatz (1300) einschließen, der mehrere zweite Öffnungen (1302) in einer Bodenfläche des zweiten Einsatzes (1300) aufweist, die das Verteilen eines Partikelmaterials einer zweiten Größe ermöglichen, wobei die mehreren zweiten Öffnungen (1302) eine andere Größe, Form und/oder Anzahl als die mehreren ersten Öffnungen (1202) aufweisen.

4. Partikelverteilungsvorrichtung (100) nach Anspruch 3, wobei die mehreren austauschbaren Einsätze (106) einen dritten Einsatz (1400) einschließen, der mehrere dritte Öffnungen (1402) in einer Bodenfläche des dritten Einsatzes (1400) aufweist, die das Verteilen eines Partikelmaterials einer dritten Größe ermöglichen, wobei die mehreren dritten Öffnungen (1402) eine andere Größe, Form und/oder Anzahl als die mehreren ersten Öffnungen (1202) und die mehreren zweiten Öffnungen (1302) aufweisen.

5. Partikelverteilungsvorrichtung (100) nach Anspruch 3, ferner mehrere Rührstifte (1604) umfassend, die an die mehreren Öffnungen angrenzend angeordnet sind, wodurch ein gleichmäßiger Partikelmaterialstrom aus dem Behälter (104) ermöglicht wird.

6. Partikelverteilungsvorrichtung (100) nach Anspruch 1, ferner eine Anpassungsanordnung (110) umfassend, um die Strömungsgeschwindigkeit des Partikelmaterials durch das individuelle Lochmuster zu steuern.

7. Partikelverteilungsvorrichtung (100) nach Anspruch 1, wobei die Verteilungsvorrichtung zur Verwendung als Schubstreuwagen ausgelegt ist.

8. Partikelverteilungsvorrichtung (100) nach Anspruch 1, wobei die Verteilungsvorrichtung zur Verwendung als Zugstreuwagen (200) ausgelegt ist.

9. Verfahren zum Verändern der Leistung einer Partikelverteilungsvorrichtung (100) nach Anspruch 1, Folgendes umfassend:
Platzieren eines lösbaren Einsatzes (106), der ein erstes Lochmuster (1204) aufweist, das Material einer ersten Größe verteilt, in dem Behälter (104);
Einsetzen der lösbaren Befestigungseinrichtung (146) durch den im Umfang (138) des lösbaren Einsatzes (106) definierten Befestigungsschlitz (142) und die in der Kante (134) der Partikelverteilungsvorrichtung (100) definierte Befestigungsöffnung (132);
Verteilen des Partikelmaterials der ersten Größe;
Lösen der lösbaren Befestigungseinrichtung (146);
Lösen des lösbaren Einsatzes (106);
Platzieren eines lösbaren Einsatzes (106), der ein zweites Lochmuster (1304) aufweist, das Material einer zweiten Größe verteilt, in dem Behälter (104);
Einsetzen der lösbaren Befestigungseinrichtung (146) durch einen im Umfang (138) des lösbaren Einsatzes (106) definierten Befestigungsschlitz (142) und die in der Kante (134) der Partikelverteilungsvorrichtung (100) definierte Befestigungsöffnung (132); und Verteilen des Partikelmaterials der zweiten Größe.

10. Verfahren nach Anspruch 9, wobei die Partikelverteilungsvorrichtung (100) ein Schub- oder ein Zugstreuwagen ist (200).

## Revendications

1. Appareil de dispersion de particules (100), comprenant:
une cuve (104) configurée de manière à contenir une matière particulaire et comportant une ouverture (128) définie dans une partie inférieure (130);
une pluralité d'inserts interchangeables (106) présentant une forme similaire à celle de la cuve (104) et qui, lorsqu'ils sont insérés dans la cuve (100), sont adaptés pour engager et s'attacher de façon détachable à un rebord (134) à l'intérieur de la cuve (104) par l'intermédiaire d'un élément de fixation (146) qui est inséré à travers au moins une fente de fixation (142) définie dans un périmètre (138) de chaque insert (106) et au moins une ouverture de fixation (132) définie dans le rebord (134), de telle sorte qu'une partie inférieure de chaque insert (106) s'étende dans l'ouverture (128) de la cuve (104), chaque insert (106) présentant une forme d'entonnoir et un motif de trous distinct défini dans la partie inférieure de chaque insert (106), dans lequel une surface inférieure de chaque insert (106) passe dans une direction descendante d'un périmètre (138) de chaque insert (106) au motif de trous distinct, facilitant de ce fait l'écoulement de la matière particulaire à travers le motif de trous distinct défini dans une partie inférieure de chaque insert (106), le motif de trous distinct facilitant l'écoulement d'une matière particulaire de taille variable à partir de l'intérieur de la cuve; et
un mécanisme de dispersion qui disperse la matière particulaire qui s'écoule à travers l'ouverture (128).

2. Appareil de dispersion de particules (100) selon la revendication 1, dans lequel la pluralité d'inserts interchangeables (106) comprend un premier insert (1200) comportant une pluralité de premières ouvertures (1202) définies dans une surface inférieure du premier insert (1200) qui facilitent la dispersion de la matière particulaire de première taille.

3. Appareil de dispersion de particules (100) selon la revendication 2, dans lequel la pluralité d'inserts interchangeables (106) comprend un deuxième insert (1300) comportant une pluralité de deuxièmes ouvertures (1302) définies dans une surface inférieure du deuxième insert (1300) qui facilitent la dispersion de la matière particulaire de deuxième taille, dans lequel la pluralité de deuxièmes ouvertures (1302) présentent une taille, une forme et/ou un nombre différent de ceux de la pluralité de premières ouvertures (1202).

4. Appareil de dispersion de particules (100) selon la revendication 3, dans lequel la pluralité d'inserts interchangeables (106) comprend un troisième insert (1400) comportant une pluralité de troisièmes ouvertures (1402) définies dans une surface inférieure du troisième insert (1400) qui facilitent la dispersion de la matière particulaire de troisième taille, dans lequel la pluralité de troisièmes ouvertures (1402) présentent une taille, une forme et/ou un nombre différent de ceux de la pluralité de premières ouvertures (1202) et de la pluralité de deuxièmes ouvertures (1302).

5. Appareil de dispersion de particules (100) selon la revendication 3, comprenant en outre une pluralité de broches d'agitation (1604) disposées à proximité de la pluralité d'ouvertures, facilitant de ce fait un écoulement uniforme de la matière particulaire hors de la cuve (104).

6. Appareil de dispersion de particules (100) selon la revendication 1, comprenant en outre un ensemble de réglage (110) configuré de manière à réguler un débit de matière particulaire à travers le motif de trous distinct.

7. Appareil de dispersion de particules (100) selon la revendication 1, dans lequel l'appareil de dispersion est configuré de manière à être utilisé comme un épandeur poussé.

8. Appareil de dispersion de particules (100) selon la revendication 1, dans lequel l'appareil de dispersion est configuré de manière à être utilisé comme un épandeur remorqué.

9. Procédé de changement de rendement d'un appareil de dispersion de particules (100) selon la revendication 1, comprenant les étapes suivantes:
placer un insert amovible (106) présentant un premier motif de trous (1204) qui distribue une matière présentant une première taille dans la cuve (104);
insérer l'élément de fixation amovible (146) à travers la fente de fixation (142) définie dans le périmètre (138) de l'insert amovible (106) et l'ouverture de fixation (132) définie dans le rebord (134) de l'appareil de dispersion de particules (100);
distribuer la matière particulaire de la première taille;
enlever l'élément de fixation amovible (146);
enlever l'insert amovible (106);
placer un insert amovible (106) présentant un second motif de trous (1304) qui distribue une matière particulaire présentant une deuxième taille dans une cuve (104);
insérer l'élément de fixation amovible (146) à travers une fente de fixation (142) définie dans un périmètre (138) de l'insert amovible (106) et l'ouverture de fixation (132) définie dans le rebord (134) de l'appareil de dispersion de particules (100); et
distribuer la matière particulaire de deuxième taille.

10. Procédé selon la revendication 9, dans lequel l'appareil de dispersion de particules (100) est un épandeur poussé ou remorqué (200).
